(19) **Europäisches Patentamt / European Patent Office / Office européen des brevets**

(11) **EP 4 130 055 A1**

(12) # EUROPEAN PATENT APPLICATION
published in accordance with Art. 153(4) EPC

(43) Date of publication:
**08.02.2023 Bulletin 2023/06**

(21) Application number: **21782105.7**

(22) Date of filing: **29.03.2021**

(51) International Patent Classification (IPC):
**C08F 8/04** (1974.07)          **C08F 240/00** (1974.07)

(52) Cooperative Patent Classification (CPC):
**C08F 8/04; C08F 240/00**

(86) International application number:
**PCT/JP2021/013242**

(87) International publication number:
**WO 2021/200802 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020063497**

(71) Applicant: ENEOS CORPORATION
**Chiyoda-ku
Tokyo 100-8162 (JP)**

(72) Inventors:
• **KOBAYASHI Masahide
Tokyo 100-8162 (JP)**
• **OZAWA Masao
Tokyo 100-8162 (JP)**
• **KUGA Toshinori
Tokyo 100-8162 (JP)**

(74) Representative: **Müller-Boré & Partner
Patentanwälte PartG mbB
Friedenheimer Brücke 21
80639 München (DE)**

(54) **METHOD FOR PRODUCING PETROLEUM RESIN FOR HOT-MELT ADHESIVE, AND METHOD FOR PRODUCING HYDROGENATED PETROLEUM RESIN**

(57)     Provided is a method for producing a petroleum resin using a tube-type reactor, the method producing a petroleum resin that exhibits good properties as an adhesive component for a hot-melt adhesive which has a narrow molecular weight distribution and a high softening point, and which exhibits good adhesive capability and also has little insoluble matter.

A method of producing a petroleum resin by using a raw material containing at least a cyclopentadiene-based component (A) and a styrene-indene-based aromatic component (B) so as to carry out a thermal polymerization reaction of the raw material, the method comprising: a first polymerization reaction step of thermally polymerizing the raw material using a loop reactor; and a second polymerization reaction step of thermally polymerizing a polymerization reaction product obtained in the first polymerization reaction step using a plug flow reactor.

EP 4 130 055 A1

# EP 4 130 055 A1

**Description**

BACKGROUND OF THE INVENTION

Field of the Invention

The present invention relates to a method of producing a petroleum resin used as a tackifier for hot-melt adhesives, and a method of producing a hydrogenated petroleum resin by adding hydrogen to the petroleum resin.

Background Art

Hot-melt adhesives are expanding their use in various fields because they are excellent in high-speed coating property, quick-curing property, solvent-free property, barrier property, energy saving property, and economic efficiency. As a common hot-melt adhesive, a composition in which a tackifier or a plasticizer is mixed with a base polymer such as a styrene-isoprene-styrene block copolymer and a hydrogenate thereof is used.

Hydrogenated petroleum resins and the like are used as tackifiers. The hydrogenated petroleum resin is obtained by, for example, hydrogenating a petroleum resin obtained by thermally polymerizing a raw material containing a cyclopentadiene-based compound and a vinyl aromatic compound.

Therefore, various production methods have been conventionally proposed for producing petroleum resins or hydrogenated petroleum resins (see, for example, Patent Literature 1 to 4).

Citation List

Patent Literature

Patent Literature 1: Japanese Unexamined Patent Publication No. S61-143413 (1986)
Patent Literature 2: Japanese Unexamined Patent Publication No. S63-260913 (1986)
Patent Literature 3: Japanese Unexamined Patent Publication No. H2-289603 (1990)
Patent Literature 4: Japanese Unexamined Patent Publication No.2015-124246

SUMMARY OF THE INVENTION

Technical Problem

When a raw material containing a cyclopentadiene-based compound and a vinyl aromatic compound is thermally polymerized to produce a petroleum resin, as shown in Patent Literature 1 and 2, a batch-type or continuous-type apparatus has been conventionally used for carrying out the polymerization reaction.

As the reactors used in batch-type and continuous-type apparatuses, tank-type reactors equipped with an agitator are used for both types. The batch-type polymerization reaction is advantageous in that a high softening point grade resin having a relatively narrow molecular weight distribution (so-called sharp molecular weight distribution) can be obtained because the residence time distribution is uniform, but is disadvantageous in that the production efficiency is low. Further, in the batch-type polymerization reaction, after the resin is produced by the polymerization reaction, a cleaning step or the like is required when moving to the next production, which is troublesome.

Meanwhile, in the continuous-type polymerization reaction, the poor production efficiency of the batch-type polymerization reaction can be solved. However, the molecular weight is difficult to control, and thus it is difficult to produce a resin having a high softening point showing a sharp molecular weight distribution.

In addition, the tank-type reactor equipped with an agitator used in the above-described patent literature has the following problems. Since the polymerization reaction is a high-temperature and high-pressure reaction, the plate thickness required for the tank-type reactor having a large diameter becomes thicker, which results in restrictions on the material and production. In the case of a commercial plant, the weights of the reactor and the support and foundation for installing the reactor become large, and the installation and maintenance become a large scale.

Further, since the tank-type reactor has an agitating device, it is necessary to prevent leakage of liquid, gas, or the like from the rotating agitating shaft when carrying out a reaction at high temperatures and high pressures, and therefore, it is necessary to ensure high manufacturing accuracy of the device, which results in high demands for maintenance.

Accordingly, considering the high-temperature and high-pressure reaction fields, it is preferable to use a tube-type reactor instead of a tank-type reactor in the production of a petroleum resin.

It is desired to produce a petroleum resin using a tube-type reactor from the viewpoint of being able to cope with upsizing of equipment and more practical plant design, and further reducing the burden of cost and maintenance.

However, when an attempt is made to produce a petroleum resin using a tube-type reactor, it has been difficult to carry out the reaction at a constant temperature while removing heat from the thermal polymerization reaction, especially when using a raw material containing large amounts of reactive compositions. Therefore, at the actual unit level, a petroleum resin that has a narrow molecular weight distribution, a high softening point, favorable adhesive performance, and less insoluble matter, exhibiting favorable quality as an adhesive component of a hot-melt adhesive has not been obtained.

In view of the above, an object of the present invention is to provide a method of producing a petroleum resin using a tube-type reactor, by which a petroleum resin that has a narrow molecular weight distribution, a high softening point, favorable adhesive performance, and less insoluble matter, exhibiting favorable quality as an adhesive component of a hot-melt adhesive is produced.

Solution to Problem

The present inventors made intensive studies to solve the above-described problems. As a result, the inventors found that the petroleum resin which is the object of the present invention can be produced using two types of tube-type reactors which are a loop reactor and a plug flow reactor by carrying out a thermal polymerization reaction of a raw material using the loop reactor and then further carrying out a thermal polymerization reaction of the obtained polymerization reaction product using the plug flow reactor. This has led to the completion of the present invention.

Specifically, the present invention includes the following aspects.

[1] A method of producing a petroleum resin by using a raw material containing at least a cyclopentadiene-based component (A) and a styrene-indene-based aromatic component (B) so as to carry out a thermal polymerization reaction of the raw material, the method comprising:

a first polymerization reaction step of thermally polymerizing the raw material using a loop reactor; and
a second polymerization reaction step of thermally polymerizing a polymerization reaction product obtained in the first polymerization reaction step using a plug flow reactor.

[2] The method of producing a petroleum resin according to [1], wherein a ratio (x/z) of reaction residence time (x) of the loop reactor to a total reaction residence time (z), which is a sum of reaction residence time (x) of the loop reactor in the first polymerization reaction step and reaction residence time (y) of the plug flow reactor in the second polymerization reaction step, is from 0.1 to 0.9.

[3] The method of producing a petroleum resin according to [2], wherein a ratio (x/z) of reaction residence time (x) of the loop reactor to a total reaction residence time (z), which is a sum of reaction residence time (x) of the loop reactor in the first polymerization reaction step and reaction residence time (y) of the plug flow reactor in the second polymerization reaction step, is from 0.2 to 0.8.

[4] The method of producing a petroleum resin according to [2] or [3], wherein the total reaction residence time (z) is from 30 to 180 minutes.

[5] The method of producing a petroleum resin according to any one of [1] to [4], wherein the cyclopentadiene-based component (A) is contained in an amount of from 50% to 90% by weight based on the raw material, and the styrene-indene-based aromatic component (B) is contained in an amount of from 10% to 50% by weight based on the raw material.

[6] The method of producing a petroleum resin according to any one of [1] to [5], wherein a weight ratio (C-1/C-2) of styrene derivatives (C-1) contributing to the thermal polymerization reaction and indene derivatives (C-2) contributing to the thermal polymerization reaction is from 0.6 to 4.0 in the styrene-indene-based aromatic component (B).

[7] The method of producing a petroleum resin according to any one of [1] to [6], wherein a temperature during the polymerization reaction in the first polymerization reaction step and the second polymerization reaction step is from 230°C to 320°C.

[8] A method of producing a hydrogenated petroleum resin, comprising a step of using a petroleum resin obtained by the method of producing a petroleum resin according to any one of [1] to [7] and hydrogenating the petroleum resin.

Advantageous Effects of Invention

According to the present invention, a method of producing a petroleum resin using a tube-type reactor, by which a petroleum resin that has a narrow molecular weight distribution, a high softening point, favorable adhesive performance, and less insoluble matter, exhibiting favorable quality as an adhesive component of a hot-melt adhesive can be provided.

BRIEF DESCRIPTION OF THE DRAWINGS

FIG. 1 is a schematic view showing an example of the structure of a loop reactor.
FIG. 2 is a schematic view showing an example of the structure of a plug flow reactor.
FIG. 3 is a schematic view showing an example of the structure of a tank-type reactor.
FIG. 4 is a schematic view showing an example of equipment for performing the first and second polymerization reaction steps for producing a petroleum resin by the method of producing a petroleum resin of the present invention.
FIG. 5 is a schematic view showing another example of equipment for performing the first and second polymerization reaction steps for producing a petroleum resin by the method of producing a petroleum resin of the present invention.

DETAILED DESCRIPTION OF THE INVENTION

Hereinafter, the method of producing a petroleum resin of the present invention will be described in detail, but the description of the constituent requirements described below is an example as an embodiment of the present invention, and is not specified in these contents.

(Method of Producing Petroleum Resin)

The method of producing a petroleum resin of the present invention comprises:

a first polymerization reaction step of carrying out a thermal polymerization reaction of a raw material using a loop reactor; and
a second polymerization reaction step of thermally polymerizing the polymerization reaction product obtained in the first polymerization reaction step using a plug flow reactor.

Before the first and second polymerization steps in the method of producing a petroleum resin of the present invention are described, first, the raw material and reactor used in the present invention will be described.

<Raw Material>

The raw material used in the method of producing the petroleum resin of the present invention contains at least a cyclopentadiene-based component (A) and a styrene-indene-based aromatic component (B).
The styrene-indene-based aromatic component (B) means containing both a styrene-based aromatic component (B-1) and an indene-based aromatic component (B-2).
The cyclopentadiene-based component (A) used as a raw material in the present invention includes a cyclopentadiene and a polymer thereof or an alicyclic diene compound such as an alkyl-substituted compound thereof. This cyclopentadiene-based component (A) may contain one or more of or two or more of alicyclic diene compounds as described above, or may be a cyclopentadiene-based fraction (CPD fraction) containing a cyclopentadiene-based component obtained by steam cracking of naphtha or the like. This CPD fraction may contain an olefinic monomer copolymerizable with the alicyclic diene compound and a polymer thereof. Examples of such an olefinic monomer include aliphatic dienes such as isoprene or piperylene.
Of cyclopentadiene-based components (A) used as a raw material in the present invention, as cyclopentadiene derivatives (A-1) that contributes to the reaction, cyclopentadiene, lower alkyl-substituted cyclopentadiene such as methyl- and ethyl-substituted cyclopentadiene, and dimers and trimers thereof as well as codimers of cyclopentadiene and monomers such as isoprene and piperylene, monomers themselves such as isoprene and piperylene, and dimers and trimers of these monomers can be mentioned.
Examples of a styrene-indene-based aromatic component (B) also used as a raw material include a styrene-based aromatic component (B-1) and an indene-based aromatic component (B-2) which are C9 aromatic hydrocarbons and are aromatic hydrocarbons having an ethylenically unsaturated bond. In a case where a mixture of the styrene-based aromatic component (B-1) and the indene-based aromatic component (B-2) is used as a raw material, a so-called C9 fraction, which is a by-product of steam cracking of naphtha or the like, can be used.
Of styrene-indene aromatic components (B), as styrene derivatives (C-1) that contribute to the thermal polymerization reaction, compounds having an olefin attached to the aromatic ring, such as styrene, vinyltoluene, and divinyltoluene can be mentioned. As indene derivatives (C-2) that contribute to the thermal polymerization reaction, compounds having an indene skeleton such as indene, methylindene, and dimethylindene can be mentioned.

In the styrene-indene-based aromatic component (B), the weight ratio (C-1/C-2) of the styrene derivatives (C-1) contributing to the thermal polymerization reaction and the indene derivatives (C-2) contributing to the thermal polymerization reaction is not particularly limited, and can be selected as appropriate depending on the purpose, but is preferably from 0.6 to 4.0, for example. From the viewpoint of the petroleum resin yield, it is preferably 0.6 or more, and from the viewpoint of miscibility with the base polymer used when the product is used, it is preferably 4.0 or less.

To the raw material used in the present invention, in addition to the reaction raw material that undergoes the polymerization reaction, a solvent may be added as necessary so as to dilute the reaction raw material.

Here, the solvent is not particularly limited and can be appropriately selected depending on the purpose and the like. Examples thereof include unreacted light fractions contained in the thermal polymerization reaction product such as pentane, hexane, heptane, benzene, toluene, and xylene.

The total amount of the compounds contributing to the reaction, i.e., cyclopentadiene derivatives (A-1), styrene derivatives (C-1), and indene derivatives (C-2), is preferably from 30% to 95% by weight, more preferably from 35% to 90% by weight, and still more preferably from 40% to 85% by weight in the mixture of the raw material and solvent. As long as the total amount is equal to or more than the lower limit of the preferred range, it is possible to effectively prevent the problem that the excessively small amount of compounds contributing to the reaction causes the amount of the resulting petroleum resin to decrease, which is economically undesirable. In addition, as long as the total amount is equal to or less than the upper limit of the preferred range, it is possible to effectively prevent the problem that the excessively large amount of compounds contributing to the reaction causes the resulting viscosity to excessively increase, which results in insufficient fluidity within the apparatus.

The weight ratio of the amount of the cyclopentadiene derivatives (A-1) to the combined amount of the styrene derivatives (C-1) and the indene derivatives (C-2), i.e., the amount of A-1/(amount of C-1 + amount of C-2), is preferably from 0.1 to 20.

The cyclopentadiene-based component (A) is preferably contained in an amount of from 50% to 90% by weight based on the raw material.

In addition, the styrene-indene-based aromatic component (B) is preferably contained in an amount of from 10% to 50% by weight based on the raw material.

The content of the styrene-indene-based aromatic component (B) is the sum of the contents of the styrene-based aromatic component (B-1) and the indene-based aromatic component (B-2).

It is more preferable that the cyclopentadiene-based component (A) is contained in an amount of from 50% to 80% by weight based on the raw material, and the styrene-indene-based aromatic component (B) is contained in an amount of from 20% to 50% by weight based on the raw material. It is still more preferable that the cyclopentadiene-based component (A) is contained in an amount of from 50% to 70% by weight based on the raw material, and the styrene-indene-based aromatic component (B) is contained in an amount of from 30% to 50% by weight based on the raw material.

<Reactor>

In the present invention, a tube-type reactor comprising a loop reactor and a plug flow reactor is used.

A tube-type reactor is a type of reactor in which a fluid is caused to react while flowing through a tube. To promote the mixing of a polymerization reaction product, a static mixer may be arranged in these reactors.

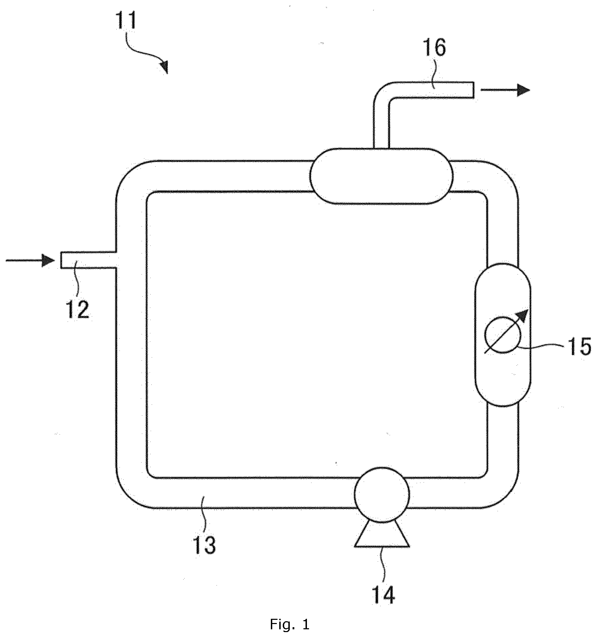

FIG. 1 is a schematic view showing an example of the structure of a loop reactor. In a loop reactor 11, a raw material is introduced into a tube-type reactor body 13 through an introduction pipe 12 and undergoes a reaction. The polymerization reaction product is discharged from the tube-type reactor body 13 through an extraction pipe 16.

In other words, the loop reactor 11 is a reactor in which a raw material and, if necessary, a solvent is continuously introduced into the tube-type reactor body 13, the raw material is polymerized while being circulated in the tube-type reactor body 13, and a polymerization reaction product is continuously extracted from the tube-type reactor body 13, thereby carrying out a polymerization reaction of the polymerization reaction product continuously.

Further, the loop reactor 11 is equipped with a pump 14 and a cooler 15.

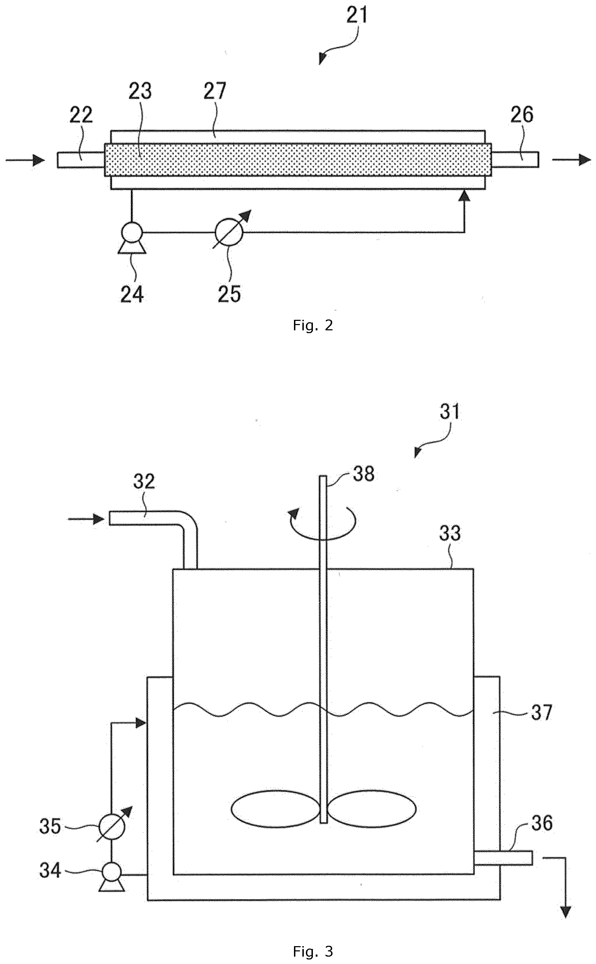

Next, FIG. 2 is a schematic view showing an example of the structure of a plug flow reactor. In a plug flow reactor 21, a raw material is introduced into a tube-type reactor body 23 through an introduction pipe 22 and undergoes a reaction. The polymerization reaction product is discharged from the tube-type reactor body 23 through an extraction pipe 26.

In other words, the plug flow reactor 21 is a reactor in which the tube-type reactor body 23 is provided, a raw material (a polymerization reaction product taken from the loop reactor in the present invention) and, if necessary, a solvent are continuously introduced from one end of the tube-type reactor body 23 and moved toward the other end thereof, while a polymerization reaction of the polymerization reaction product is further carried out, and then the polymerization reaction product is continuously extracted from the other end.

Further, the plug flow reactor 21 is equipped with a pump 24 and a cooler 25. The tube-type reactor body 23 is covered with a jacket 27 and cooled by the coolant inside this jacket 27. The coolant is circulated by the pump 24 and cooled by the cooler 25.

In FIG. 2, the tube-type reactor body 23 is illustrated as a straight tube, but it may be coiled.

As shown in FIGS. 1 and 2, a tube-type reactor in which a fluid is allowed to flow through a tube for reaction has a different structure from a conventional tank-type reactor in which a reaction occurs in an agitating tank.

FIG. 3 is a schematic view showing an example of the structure of a tank-type reactor. In a tank-type reactor 31, a raw material is introduced into a tank-type reactor body 33 through an introduction pipe 32 and undergoes a reaction. The polymerization reaction product is discharged from the tank-type reactor body 33 through an extraction pipe 36. The tank-type reactor 31 has a pump 34, a cooler 35, a jacket 37, and an agitator 38.

<Residence Time>

In the loop reactor and the plug flow reactor, residence time (HRT) represents the average amount of time that a fluid (e. g., a liquid) entering the reactor remains in the reactor. For example, a larger (longer) residence time (HRT) means that a substance contained in a liquid undergoes a reaction for a longer period of time.

The residence time (HRT) (hr) can be calculated by the following Formula (1).

[Formula 1]

$$HRT = V / Q \qquad (1)$$

In Formula (1) above, V indicates the reactor volume ($m^3$) and Q indicates the flow rate ($m^3$/hr).

<Polymerization Step>

As described above, the method of producing a petroleum resin of the present invention comprises: a first polymerization reaction step of carrying out a thermal polymerization reaction using a loop reactor; and a second polymerization reaction step of thermally polymerizing the polymerization reaction product obtained in the first polymerization reaction step using a plug flow reactor.

The present invention is characterized in that two types of tube-type reactors, which are a loop reactor and a plug flow reactor, are used for carrying out a polymerization reaction of a raw material, during which the polymerization reaction is carried out using the loop reactor before the plug flow reactor. Accordingly, As is clear from the results of the following Examples, a petroleum resin that has a narrow molecular weight distribution, a high softening point, favorable adhesive performance, and less insoluble matter, exhibiting favorable quality as an adhesive component of a hot-melt adhesive can be produced.

When the polymerization reaction is carried out only in the loop reactor, a petroleum resin having a wide molecular weight distribution may be obtained, and it does not show favorable adhesive performance as an adhesive component. Meanwhile, when the polymerization reaction is carried out only in the plug flow reactor, it becomes difficult to control heat generation, and as a result of excessive progress in polymerization, a large amount of insoluble matter is obtained, so that a high quality petroleum resin cannot be obtained.

The present inventors found that a petroleum resin having a narrow molecular weight distribution and favorable adhesive performance in which the production of insoluble matter is suppressed can be produced by carrying out the polymerization reaction in the order of the loop reactor and the plug flow reactor. In the loop reactor in which the temperature of the exothermic reaction is easy to control, it is possible to prevent a rapid exothermic reaction in the plug flow reactor in the subsequent stage by partially advancing the polymerization reaction of the raw material. In addition, in the polymerization reaction, since the molecular weight increases remarkably in the latter half of the reaction, it is possible to produce a petroleum resin having a narrow molecular weight distribution by performing the polymerization by using the plug flow reactor giving a narrow residence time distribution.

The object of the present invention cannot be achieved by simply using a loop reactor and a plug flow reactor together. In a case where a polymerization reaction is carried out in the order of a plug flow reactor and a loop reactor, as is clear from the results of the Reference Examples below, a large amount of insoluble matter is obtained, and the molecular weight distribution is widened. Thus, a high-quality petroleum resin cannot be produced.

Since the method of producing a petroleum resin of the present invention suppresses the production of insoluble matter, it is possible to suppress the fouling phenomenon in which insoluble matter adheres and accumulates in the tube of the reactor. When fouling causes clogging and temperature unevenness in the tube, stable supply of petroleum resin becomes difficult, and frequent operation stoppages and disassembly and cleaning of reactors are unavoidable, which reduces production efficiency. Therefore, according to the present invention, a petroleum resin can be stably

EP 4 130 055 A1

produced with high production efficiency and without the burden of maintenance.

In the method of producing a petroleum resin of the present invention, the ratio of reaction residence time (x) of the loop reactor to a total reaction residence time (z), which is the sum of reaction residence time (x) of the loop reactor in the first polymerization reaction step and reaction residence time (y) of the plug flow reactor in the second polymerization reaction step, is preferably from 0.1 to 0.9. This is because it is necessary to use each reactor for a certain period of time in order to fully exert the effects of using the loop reactor and the plug flow reactor.

The ratio (x/z) of the reaction residence time (x) of the loop reactor to the total reaction residence time (z) is preferably from 0.2 to 0.8, and more preferably from 0.3 to 0.8.

The total residence time in the first and second polymerization reaction steps and the temperature during the polymerization reaction can be appropriately adjusted according to the constituent components of the raw material and their ratios. However, the total residence time is, for example, preferably 30 to 180 minutes and more preferably 45 to 160 minutes. In a case where the residence time is short, the polymerization does not proceed sufficiently, and sufficient adhesive performance is not exhibited. Further, in a case where the residence time is long, the polymerization proceeds excessively, and as a result, the excessive polymerization proceeds, so that the insoluble matter increases, and continuous operation of the apparatus becomes difficult.

The temperature during the polymerization reaction is, for example, preferably from 230°C to 320°C, and more preferably from 240°C to 300°C.

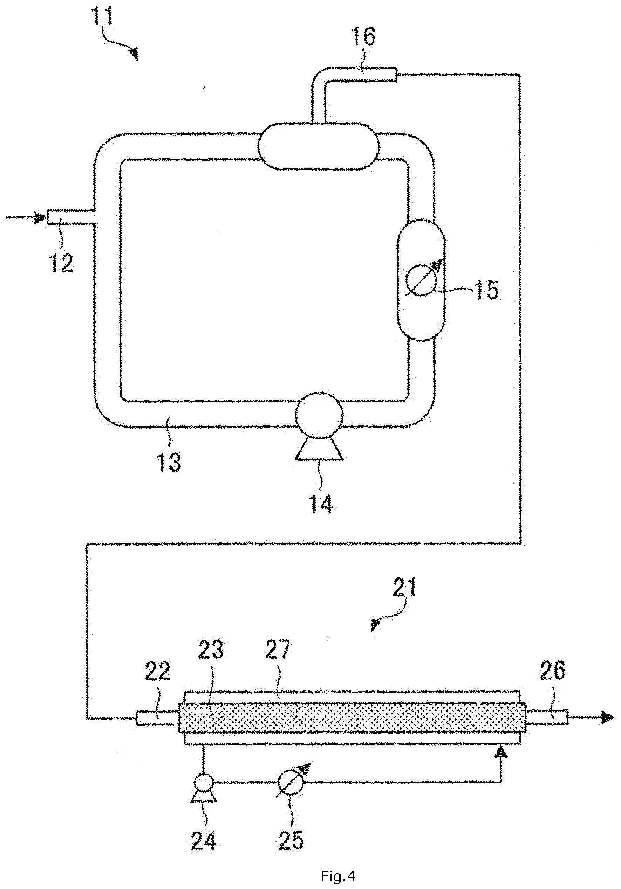

FIG. 4 is a schematic view showing an example of equipment for performing the first and second polymerization reaction steps for producing a petroleum resin by the method of producing a petroleum resin of the present invention.

In the present invention, the number of reactors such as the loop reactor and the plug flow reactor is not particularly limited and can be appropriately selected depending on the intended purpose. For example, as long as the polymerization in the loop reactor is performed before the polymerization in the plug flow reactor, a plurality of loop reactors may be used for the polymerization.

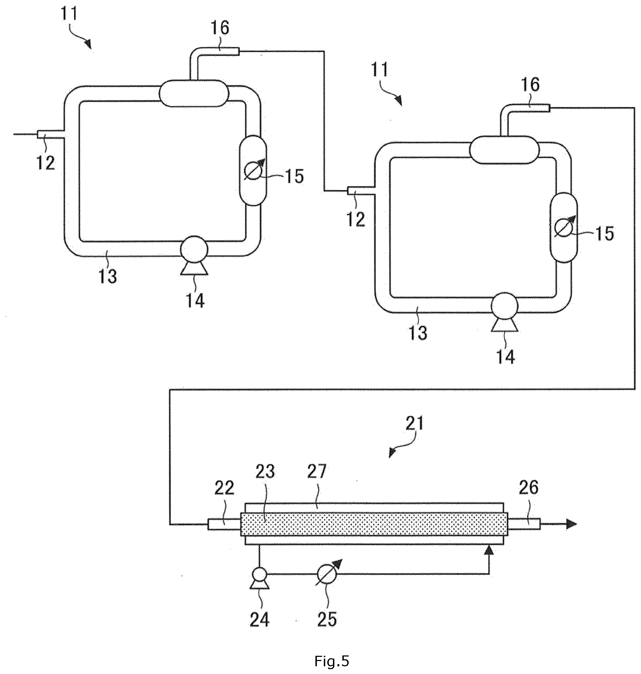

FIG. 5 is a schematic view showing another example of equipment for performing the first and second polymerization reaction steps for producing a petroleum resin by the method of producing a petroleum resin of the present invention in a case where a plurality of loop reactors are used.

The blended raw materials are thermally copolymerized in the presence or absence of a solvent in a temperature range of from 230°C to 320°C for 30 to 180 minutes under a pressure equal to or higher than that capable of retaining the polymerization component in the liquid phase.

For the petroleum resin obtained by the above-described method of producing a petroleum resin of the present invention, a step of removing unreacted components and oligomers, or if necessary, the solvent may then be carried out. For example, the step of removing unreacted components, oligomers, and the like can be carried out by vacuum distillation or steam distillation.

Further, a step of hydrogenating the obtained petroleum resin may be further carried out. In particular, by performing a hydrogenation step, the petroleum resin can be effectively used as an adhesive component of hot-melt adhesives.

Hereinafter, a method of producing a hydrogenated petroleum resin by hydrogenating a petroleum resin will be described.

(Method of Producing Hydrogenated Petroleum Resin)

The method of producing a hydrogenated petroleum resin of the present invention is based on hydrogenating the petroleum resin obtained by the above-described method of producing a petroleum resin of the present invention.

The method of hydrogenation is not particularly limited, and a generally known method can be used. For example, a catalyst containing a metal such as nickel, palladium, cobalt, platinum, or rhodium can be used for hydrogenation at a temperature of from 100°C to 400°C in the presence of a diluent.

The hydrogenated petroleum resin according to the present invention is produced by using a high-quality petroleum resin having a narrow molecular weight distribution and a high softening point and hydrogenating the petroleum resin. Therefore, when the hydrogenated petroleum resin according to the present invention is used as an adhesive component of a hot-melt adhesive, it exhibits excellent adhesive performance as is clear from the results of the following examples.

EXAMPLES

The present invention will be described in more detail with reference to Examples below, but the scope of the present invention is not limited to these Examples.

(Example 1)

A raw material containing a cyclopentadiene-based component (A), a styrene-indene-based aromatic component (B), and toluene as a solvent was prepared. The raw material composition is shown in Table 1 below.

The prepared raw material solution was circulated in the loop reactor (internal volume: 100 cc; inner diameter: 10 mm) shown in FIG. 1 at a reactor inlet temperature of 275°C so as to yield the loop residence time (x (minutes)) as shown in Table 2 below.

The product solution obtained via the loop reactor was further processed through the plug flow reactor shown in FIG. 2 at a reactor inlet temperature of 275°C and a flow rate of 0.2 cc/min.

Here, a plug flow reactor having an inner diameter of 7 mm and a length such that the plug flow residence time (y (minutes)) had a value shown in Table 2 below was used.

After completion of the reaction by the plug flow reactor, the solvent, unreacted components, and oligomers were removed by distillation, thereby obtaining a petroleum resin (I).

<Calculation of Molecular Weight Distribution>

The weight average molecular weight (Mw) and the number average molecular weight (Mn) of petroleum resin (I) were measured, and the molecular weight distribution (Mw/Mn: weight average molecular weight (Mw)/number average molecular weight (Mn)) was calculated. The weight average molecular weight (Mw) and the number average molecular weight (Mn) were measured by gel permeation chromatography (GPC) under the following conditions.

Measuring system: HLC-8320GPC (manufactured by Tosoh Corporation)
Eluent: Tetrahydrofuran
Column: TSKgel (manufactured by Tosoh Corporation)
Standard substance: Polystyrene (manufactured by Tosoh Corporation)
Detector: Differential refractometer (manufactured by Tosoh Corporation)

<Measurement of Softening Point>

The softening point of the petroleum resin (I) was measured in accordance with ASTM D6090 using a dropping point/softening point measuring system DP70 manufactured by METTLER TOLEDO.

<Production of Insoluble Matter>

The thermally polymerized petroleum resin was dissolved in cyclohexane so as to yield a 50% by weight solution, and then filtered through a stainless steel mesh having a nominal diameter of 80 mesh. The weight (mg/Feed-kg) of the remaining substance was measured.

The evaluation results of the properties of the petroleum resin (I) are shown in Table 2 below.

Subsequently, 80 grams of this petroleum resin (I), 80 grams of cyclohexane as a diluent, and 2.0 grams of a nickel-based catalyst (N-113, manufactured by JGC Catalysts and Chemicals Ltd.) as a catalyst were charged into a 0.2-liter autoclave. A hydrogenation reaction was carried out at a hydrogen pressure of 150 kg/cm$^2$G and 300°C for 1 hour.

After the completion of the reaction, the diluent was removed by distillation, thereby obtaining a hydrogenated petroleum resin (II).

The adhesive performance of the hydrogenated petroleum resin (II) was evaluated by the method described below.

<Adhesive Performance>

The adhesive strength was evaluated by a method in accordance with JIS Z 0237: 2009. First, the hydrogenated petroleum resin (II), SBS resin (ASAPRENE (trademark) T-438 manufactured by Asahi Kasei Corporation), and a rubber processing oil (SUNPURE LW-500 manufactured by JAPAN SUN OIL COMPANY, LTD.) were mixed so as to have a mass ratio of 25/60/15, respectively, thereby obtaining an adhesive component. The obtained adhesive component was dissolved in toluene and coated on a test piece made of PET film. Here, the thickness of the adhesive component after evaporating the toluene was adjusted to 50 micrometers. Using this test piece, a 180° peel test was carried out at a tensile speed of 30 cm per minute so as to measure the adhesive strength.

The following A to D were used as the criteria for the adhesive performance of the hydrogenated petroleum resin (II) according to the obtained adhesive strength (N/mm) value.

A: 10 N/10 mm or more
B: 8 N/10 mm or more and less than 10 N/10 mm
C: 7 N/10 mm or more and less than 8 N/10 mm
D: Less than 7 N/10 mm

The evaluation results of the properties of the hydrogenated petroleum resin (II) are shown in Table 2 below.

<Comprehensive Evaluation>

When insoluble matter is obtained in excess of 280 mg/Feed-kg, it is difficult to operate at the actual unit level. The production of insoluble matter is preferably suppressed to 280 mg or less, more preferably 230 mg or less, and still more preferably 150 mg or less.
Further, in a case where the adhesive performance is D in the above-described evaluation criteria, it is difficult to practically use the resin as an adhesive component. The adhesive performance is preferably C, more preferably B, and still more preferably A in the above-described evaluation criteria.
Therefore, the petroleum resin of Example 1 was comprehensively evaluated according to the following criteria.

A: The production of insoluble matter is 150 mg or less, and the adhesive performance is A.
B: The production of insoluble matter is more than 150 mg and 230 mg or less, and the adhesive performance is A, or the adhesive performance is B, and the production of insoluble matter is 150 mg or less.
C: The production of insoluble matter is more than 150 mg and 230 mg or less, and the adhesive performance is B.
D: The production of insoluble matter is more than 230 mg and 280 mg or less, and the adhesive performance is A or B, or the adhesive performance is C, and the production of insoluble matter is 230 mg or less.
E: The production of insoluble matter is larger than 230 mg and 280 mg or less, and the adhesive performance is C.
F: The production of insoluble matter is greater than 280 mg, or the adhesive performance is D.

(Examples 2 to 8)

A petroleum resin and a hydrogenated petroleum resin were produced in the same manner as in Example 1 except that the loop residence time (x (minutes)) and plug flow residence time (y (minutes)) in Example 1 were changed as shown in Table 2.
As described in Example 1, also in Examples 2 to 8, as the plug flow reactor, one having an inner diameter of 7 mm and a length such that the plug flow residence time (y (minutes)) had a value shown in Table 2 was used.
The properties of the petroleum resin and the hydrogenated petroleum resin were evaluated in the same manner as in Example 1. The results are shown in Table 2.

(Comparative Examples 1 and 2)

A petroleum resin and a hydrogenated petroleum resin were produced in the same manner as in Example 1 except that the loop residence time (x (minutes)) and plug flow residence time (y (minutes)) in Example 1 were changed as shown in Table 2.
As described in Example 1, also in Comparative Example 1, as the plug flow reactor, one having an inner diameter of 7 mm and a length such that the plug flow residence time (y (minutes)) had a value shown in Table 2 was used.
The properties of the petroleum resin and the hydrogenated petroleum resin were evaluated in the same manner as in Example 1. The results are shown in Table 2.

(Reference Examples 1 and 2)

A petroleum resin and a hydrogenated petroleum resin were produced in the same manner as in Example 1 except that the loop residence time (x (minutes)) and plug flow residence time (y (minutes)) in Example 1 were changed as shown in Table 2.
As described in Example 1, also in Reference Example 1, as the plug flow reactor, one having an inner diameter of 7 mm and a length such that the plug flow residence time (y (minutes)) had a value shown in Table 2 was used.
The properties of the petroleum resin and the hydrogenated petroleum resin were evaluated in the same manner as in Example 1. The results are shown in Table 2.

(Example 9)

A petroleum resin and a hydrogenated petroleum resin were produced in the same manner as in Example 1 except that the raw material composition and the loop residence time (x (minutes)) and plug flow residence time (y (minutes)) in Example 1 were changed as shown in Tables 1 and 3, respectively.

As described in Example 1, also in Examples 9, as the plug flow reactor, one having an inner diameter of 7 mm and a length such that the plug flow residence time (y (minutes)) had a value shown in Table 3 was used.

The properties of the petroleum resin and the hydrogenated petroleum resin were evaluated in the same manner as in Example 1. The results are shown in Table 3.

(Comparative Examples 3 and 4)

A petroleum resin and a hydrogenated petroleum resin were produced in the same manner as in Example 9 except that the loop residence time (x (minutes)) and plug flow residence time (y (minutes)) in Example 9 were changed as shown in Table 3.

As described in Example 1, also in Comparative Example 3, as the plug flow reactor, one having an inner diameter of 7 mm and a length such that the plug flow residence time (y (minutes)) had a value shown in Table 3 was used.

The properties of the petroleum resin and the hydrogenated petroleum resin were evaluated in the same manner as in Example 9. The results are shown in Table 3.

(Example 10)

A petroleum resin and a hydrogenated petroleum resin were produced in the same manner as in Example 1 except that the raw material composition and loop residence time (x (minutes)) and plug flow residence time (y (minutes)) in Example 1 were changed as shown in Tables 1 and 4, respectively.

As described in Example 1, also in Examples 10, as the plug flow reactor, one having an inner diameter of 7 mm and a length such that the plug flow residence time (y (minutes)) had a value shown in Table 4 was used.

The properties of the petroleum resin and the hydrogenated petroleum resin were evaluated in the same manner as in Example 1. The results are shown in Table 4.

(Comparative Examples 5 and 6)

A petroleum resin and a hydrogenated petroleum resin were produced in the same manner as in Example 10 except that the loop residence time (x (minutes)) and plug flow residence time (y (minutes)) in Example 10 were changed as shown in Table 4.

As described in Example 1, also in Comparative Example 5, as the plug flow reactor, one having an inner diameter of 7 mm and a length such that the plug flow residence time (y (minutes)) had a value shown in Table 4 was used.

The properties of the petroleum resin and the hydrogenated petroleum resin were evaluated in the same manner as in Example 10. The results are shown in Table 4.

(Reference Example 3)

The same raw material as in Example 1 was prepared.

The prepared raw material solution was processed through the plug flow reactor shown in FIG. 2 at a reactor inlet temperature of 275°C and a flow rate of 0.2 cc/min.

Here, a plug flow reactor having an inner diameter of 7 mm and a length such that the plug flow residence time (y (minutes)) had a value shown in Table 5 below was used.

The product solution obtained via the plug flow reactor was circulated in the loop reactor (internal volume: 100 cc; inner diameter: 10 mm) shown in FIG. 1 at a reactor inlet temperature of 275°C so as to yield the loop residence time (x (minutes)) as shown in Table 5 below.

After completion of the reaction by the loop reactor, the solvent, unreacted components, and oligomers were removed by distillation, thereby obtaining a petroleum resin (III).

Next, the petroleum resin (III) was hydrogenated in the same manner as in Example 1 in which the petroleum resin (I) was hydrogenated, thereby obtaining a hydrogenated petroleum resin (IV). The properties of the petroleum resin (III) and the hydrogenated petroleum resin (IV) were evaluated. The results are shown in Table 5.

[Table 1]

| Raw Material Composition (% by weight) | Examples 1 to 8 Comparative Examples 1 and 2 Reference Examples 1 and 2 | Example 9 Comparative Examples 3 and 4 | Example 10 Comparative Examples 5 and 6 |
|---|---|---|---|
| Cyclopentadiene-based component (A) | 50 | 53.5 | 86.7 |
| Styrene-indene-based aromatic component (B) | 50 | 46.5 | 13.3 |
| Styrene/Indene | 1.8 | 3.6 | 3.6 |

[Table 2]

| | | Example 1 | Example 2 | Example 3 | Example 4 | Example 5 | Example 6 | Example 7 | Example 8 | Comparative Example 1 | Reference Example 1 | Reference Example 2 | Comparative Example 2 |
|---|---|---|---|---|---|---|---|---|---|---|---|---|---|
| Residence Time | Loop Residence Time (x) (min) | 5.8 | 11.5 | 23.0 | 34.5 | 55.5 | 92.0 | 103.5 | 109.3 | 0.0 | 0.0 | 55.5 | 115.0 |
| | Plug Flow Residence Time (y) (min) | 109.3 | 103.5 | 92.0 | 80.5 | 59.3 | 23.0 | 11.5 | 5.8 | 115.0 | 59.3 | 0.0 | 0.0 |
| | Total Residence Time (z) (min) | 115 | 115 | 115 | 115 | 115 | 115 | 115 | 115 | 115 | 59.3 | 55.5 | 115 |
| | Loop/Total Residence Time (x/z) | 0.05 | 0.10 | 0.20 | 0.30 | 0.48 | 0.80 | 0.90 | 0.95 | 0.00 | 0.00 | 1.00 | 1.00 |
| Plug Flow Temperature | Inlet Temperature (°C) | 275 | 275 | 275 | 275 | 275 | 275 | 275 | 275 | 275 | 275 | - | - |
| | Outlet Temperature (°C) | 285 | 283 | 282 | 282 | 281 | 280 | 280 | 280 | 289 | 285 | - | - |
| Properties of Petroleum Resin | Mn (275°C) | 462 | 464 | 468 | 468 | 469 | 468 | 453 | 441 | 461 | 410 | 402 | 430 |
| | Mw/Mn | 2.0 | 2.0 | 1.9 | 1.9 | 2.0 | 1.9 | 2.2 | 2.5 | 2.0 | 2.1 | 2.9 | 2.8 |
| | Softening Point (°C) | 86 | 87 | 90 | 90 | 90 | 87 | 86 | 84 | 85 | 72 | 71 | 82 |
| | Insoluble Matter (mg/Feed-kg) | 232 | 181 | 145 | 134 | 131 | 121 | 116 | 115 | 309 | 151 | 90 | 110 |
| Properties of Hydrogenated Petroleum Resin | Adhesive Performance | A | A | A | A | A | A | B | C | A | D | D | D |
| Comprehensive Evaluation | | D | B | A | A | A | A | B | D | F | F | F | F |

[Table 3]

|  |  | Example 9 | Comparative Example 3 | Comparative Example 4 |
|---|---|---|---|---|
| Residence Time | Loop Residence Time (x) (min) | 55.5 | 0.0 | 115.0 |
|  | Plug Flow Residence Time (y) (min) | 59.3 | 115.0 | 0.0 |
|  | Total Residence Time (z) (min) | 115 | 115 | 115 |
|  | Loop/Total Residence Time (x/z) | 0.48 | 0.00 | 1.00 |
| Properties of Petroleum Resin | Mn (275°C) | 535 | 518 | 430 |
|  | Mw/Mn | 3.2 | 3.3 | 4.5 |
|  | Softening Point (°C) | 94 | 90 | 82 |
|  | Insoluble Matter (mg/Feed-kg) | 145 | 446 | 124 |
| Properties of Hydrogenated Petroleum Resin | Adhesive Performance | A | A | D |

[Table 4]

|  |  | Example 10 | Comparative Example 5 | Comparative Example 6 |
|---|---|---|---|---|
| Residence Time | Loop Residence Time (x) (min) | 55.5 | 0.0 | 115.0 |
|  | Plug Flow Residence Time (y) (min) | 59.3 | 115.0 | 0.0 |
|  | Total Residence Time (z) (min) | 115 | 115 | 115 |
|  | Loop/Total Residence Time (x/z) | 0.48 | 0.00 | 1.00 |
| Properties of Petroleum Resin | Mn (275°C) | 539 | 530 | 448 |
|  | Mw/Mn | 3.2 | 3.3 | 4.8 |
|  | Softening Point (°C) | 96 | 94 | 86 |
|  | Insoluble Matter (mg/Feed-kg) | 168 | 466 | 145 |
| Properties of Hydrogenated Petroleum Resin | Adhesive Performance | A | A | D |

[Table 5]

| | | Reference Example 3 |
|---|---|---|
| Residence Time | Loop Residence Time (x) (min) | 55.5 |
| | Plug Flow Residence Time (y) (min) | 59.3 |
| | Total Residence Time (z) (min) | 115 |
| | Loop/Total Residence Time (x/z) | 0.48 |
| Properties of Petroleum Resin | Mn (275°C) | 447 |
| | Mw/Mn | 3.0 |
| | Softening Point (°C) | 85 |
| | Insoluble Matter (mg/Feed-kg) | 367 |
| Properties of Hydrogenated Petroleum Resin | Adhesive Performance | D |

As is clear from the above Examples, the petroleum resin obtained by the present invention is a petroleum resin having a narrow molecular weight distribution, a high softening point, and less insoluble matter, and exhibiting favorable quality. It was found that the hydrogenated petroleum resin obtained by hydrogenating such a petroleum resin is a hydrogenated petroleum resin which exhibits favorable adhesive performance and excellent quality as an adhesive component of a hot-melt adhesive.

In particular, it was found that when the ratio (x/z) of the reaction residence time (x) of the loop reactor to the total reaction residence time (z) is in the range of from 0.2 to 0.8, a petroleum resin having less insoluble matter, high adhesive performance, and a high overall evaluation can be obtained (see the results of Examples 3 to 6 in Table 2). It was further found that a high-quality petroleum resin having less insoluble matter can be obtained in the case of production when the ratio (x/z) is in the range of from 0.3 to 0.8 (see the results of Examples 4 to 6 in Table 2).

It was found that since the petroleum resin obtained by the present invention has less insoluble matter and less fouling, the method of producing a petroleum resin of the present invention is a production method capable of continuous operation and excellent in economy.

Industrial Applicability

According to the present invention, a petroleum resin that is particularly preferably used as a tackifier resin for a hot-melt adhesive and a hydrogenated petroleum resin can be produced.

Reference Signs List

11   Loop reactor
12   Introduction pipe
13   Tube-type reactor body
14   Pump
15   Cooler
16   Extraction pipe
21   Plug flow reactor
22   Introduction pipe
23   Tube-type reactor body
24   Pump
25   Cooler
26   Extraction pipe
27   Jacket
31   Tank-type reactor
32   Introduction pipe
33   Tank-type reactor body
34   Pump
35   Cooler

36      Extraction pipe
37      Jacket
38      Agitator

**Claims**

1. A method of producing a petroleum resin by using a raw material containing at least a cyclopentadiene-based component (A) and a styrene-indene-based aromatic component (B) so as to carry out a thermal polymerization reaction of the raw material, the method comprising:

   a first polymerization reaction step of thermally polymerizing the raw material using a loop reactor; and
   a second polymerization reaction step of thermally polymerizing a polymerization reaction product obtained in the first polymerization reaction step using a plug flow reactor.

2. The method of producing a petroleum resin according to claim 1, wherein a ratio (x/z) of reaction residence time (x) of the loop reactor to a total reaction residence time (z), which is a sum of reaction residence time (x) of the loop reactor in the first polymerization reaction step and reaction residence time (y) of the plug flow reactor in the second polymerization reaction step, is from 0.1 to 0.9.

3. The method of producing a petroleum resin according to claim 2, wherein a ratio (x/z) of reaction residence time (x) of the loop reactor to a total reaction residence time (z), which is a sum of reaction residence time (x) of the loop reactor in the first polymerization reaction step and reaction residence time (y) of the plug flow reactor in the second polymerization reaction step, is from 0.2 to 0.8.

4. The method of producing a petroleum resin according to claim 2 or 3, wherein the total reaction residence time (z) is from 30 to 180 minutes.

5. The method of producing a petroleum resin according to any one of claims 1 to 4, wherein the cyclopentadiene-based component (A) is contained in an amount of from 50% to 90% by weight based on the raw material, and the styrene-indene-based aromatic component (B) is contained in an amount of from 10% to 50% by weight based on the raw material.

6. The method of producing a petroleum resin according to any one of claims 1 to 5, wherein a weight ratio (C-1/C-2) of styrene derivatives (C-1) contributing to the thermal polymerization reaction and indene derivatives (C-2) contributing to the thermal polymerization reaction is from 0.6 to 4.0 in the styrene-indene-based aromatic component (B).

7. The method of producing a petroleum resin according to any one of claims 1 to 6, wherein a temperature during the polymerization reaction in the first polymerization reaction step and the second polymerization reaction step is from 230°C to 320°C.

8. A method of producing a hydrogenated petroleum resin, comprising a step of using a petroleum resin obtained by the method of producing a petroleum resin according to any one of claims 1 to 7 and hydrogenating the petroleum resin.

Fig. 1

Fig. 2

Fig. 3

Fig.4

Fig.5

## INTERNATIONAL SEARCH REPORT

| | International application No. |
|---|---|
| | PCT/JP2021/013242 |

### A. CLASSIFICATION OF SUBJECT MATTER
Int.Cl. C08F8/04(2006.01)i, C08F240/00(2006.01)i
FI: C08F240/00, C08F8/04

According to International Patent Classification (IPC) or to both national classification and IPC

### B. FIELDS SEARCHED
Minimum documentation searched (classification system followed by classification symbols)
Int.Cl. C08F8/04, C08F240/00

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2002/062892 A1 (IDEMITSU KOSAN CO., LTD.) 15 August 2002 (2002-08-15) | 1-8 |
| A | WO 2009/107765 A1 (TORAY INDUSTRIES, INC.) 03 September 2009 (2009-09-03) | 1-8 |
| A | JP 05-194629 A (TOONETSUKUSU KK) 03 August 1993 (1993-08-03) | 1-8 |

☐ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 May 2021 | 15 June 2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/013242

```
WO 2002/062892 A1  15 August 2002      (Family: none)

WO 2009/107765 A1  03 September 2009   US 2010/0324231 A1
                                       EP 2248834 A1
                                       CN 101889028 A
                                       TW 200940568 A
                                       AT 555136 T

JP 05-194629 A      03 August 1993     (Family: none)
```

EP 4 130 055 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61143413 A
- JP S63260913 A
- JP H2289603 A
- JP 2015124246 A